**Europäisches Patentamt**

(19) **European Patent Office**

**Office européen des brevets**

(11) Numéro de publication: **0 034 082**
**B1**

(12) **FASCICULE DE BREVET EUROPEEN**

(45) Date de publication du fascicule du brevet:
**23.11.83**

(51) Int. Cl.³: **H 04 B 9/00**

(21) Numéro de dépôt: **81400109.5**

(22) Date de dépôt: **27.01.81**

(54) Dispositif de déclenchement d'alarme pour une insuffisance du niveau de transmission, pour module récepteur d'un système de transmission sur fibre optique.

(30) Priorité: **12.02.80 FR 8003047**

(43) Date de publication de la demande:
**19.08.81 Bulletin 81/33**

(45) Mention de la délivrance du brevet:
**23.11.83 Bulletin 83/47**

(84) Etats contractants désignés:
**BE CH DE GB IT LI NL**

(56) Documents cités:
**DE - A - 2 853 353**

(73) Titulaire: **LIGNES TELEGRAPHIQUES ET TELEPHONIQUES L.T.T., 1, rue Charles Bourseul, F-78702 Conflans Ste Honorine (FR)**

(72) Inventeur: **Jarret, Bertrand, THOMSON-CSF SCPI 173, Bld Haussmann, F-75360 Paris Cedex 08 (FR)**
Inventeur: **Cordier, Rose, THOMSON-CSF SCPI 173, Bld Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

ACTORUM AG

## Dispositif de déclenchement d'alarme pour une insuffisance du niveau de transmission, pour module récepteur d'un système de transmission sur fibre optique

La présente invention se rapporte d'une manière générale aux systèmes de transmission sur fibre optique et concerne plus particulièrement un dispositif de déclenchement d'alarme pour une insuffisance du niveau de transmission sur la ligne, pour module récepteur d'un système simplifié de transmission pour liaison mono-fibre.

Un système de transmission sur fibre optique est constitué d'un module émetteur, d'un module récepteur et d'une fibre agencée entre ces modules. Le module émetteur comporte une embase émettrice constituée d'une diode laser, d'une photodiode de contrôle et d'une optique de couplage laser-fibre insérée dans une fiche de connecteur pour le raccordement de ladite embase au câble à fibre optique, et une électronique de commande assurant entre autres une régulation de la puissance optique émise. Le module récepteur comporte une embase détectrice constituée d'un photodétecteur, tel qu'une photodiode à avalanche, et d'une optique de couplage photodiode-fibre insérée dans une fiche de connecteur pour le raccordement de ladite embase au câble à fibre optique, et une électronique de commande assurant entre autres une régulation automatique de gain de la photodiode à avalanche. Pour une description détaillée du module récepteur, on se reportera par exemple à l'article publié dans la revue: «The Bell System Technical Journal», volume 57, n° 6, Juillet-Août 1978, page 1837, intitulé: «Pratical 45-Mb/s Regenerator for Lightwave Transmission».

On connaît déjà un dispositif de déclenchement d'alarme pour une insuffisance du niveau de transmission pour module récepteur d'un système sur fibre optique, comme cela est décrit dans la demande de brevet allemand n° 2 853 353. Selon cette demande, le dispositif comporte principalement un photodétecteur avec une régulation automatique de gain, un circuit comparateur de tension et des moyens de déclenchement d'alarme connectés en sortie du comparateur de tension.

En outre, dans un système de transmission utilisant plusieurs fibres optiques, il est également connu d'employer un microprocesseur assurant la gestion du module récepteur et en particulier le déclenchement d'une alarme lors d'une insuffisance du niveau de transmission.

Cependant, on ne peut justifier l'utilisation d'un microprocesseur dans le cas d'un système de transmission utilisant une seule fibre optique.

Linvention a donc pour objet un dispositif de déclenchement d'alarme pour une insuffisance du niveau de transmission, pour récepteur d'un système de transmission utilisant une fibre optique, comprenant un photodétecteur avec un circuit de régulation automatique de gain, un circuit comparateur de tension et des moyens de déclenchement d'alarme connectés à la sortie du circuit comparateur de tension, caractérisé en ce que le dispositif comporte:

un filtre de bande passante extérieure à la bande de fréquences utilisée à la transmission sur fibre optique dont l'entrée est connectée au photodétecteur;

des moyens d'amplification connectés à la sortie du filtre; et

des moyens de redressement connectés à la sortie des moyens d'amplification, le circuit comparateur de tension étant connecté à la sortie des moyens de redressement.

On notera que le circuit électrique du dispositif de déclenchement d'alarme décrit ci-dessus est d'une conception particulièrement simple.

Suivant une autre caractéristique de l'invention, la bande passante du filtre est extérieure à la bande de fréquences utilisée à la transmission sur fibre optique.

D'autres caractéristiques et avantages de l'invention apparaîtront mieux dans la description detaillée qui suit et se réfère aux dessins annexés, donnés uniquement à titre d'exemple et dans lesquels:

la figure 1 est un diagramme partiellement sous forme de blocs du module récepteur comportant une première variante du dispositif de déclenchement d'alarme selon l'invention; et

la figure 2 est un diagramme partiellement sous forme de blocs du module récepteur comportant une seconde variante du dispositif de déclenchement d'alarme selon l'invention.

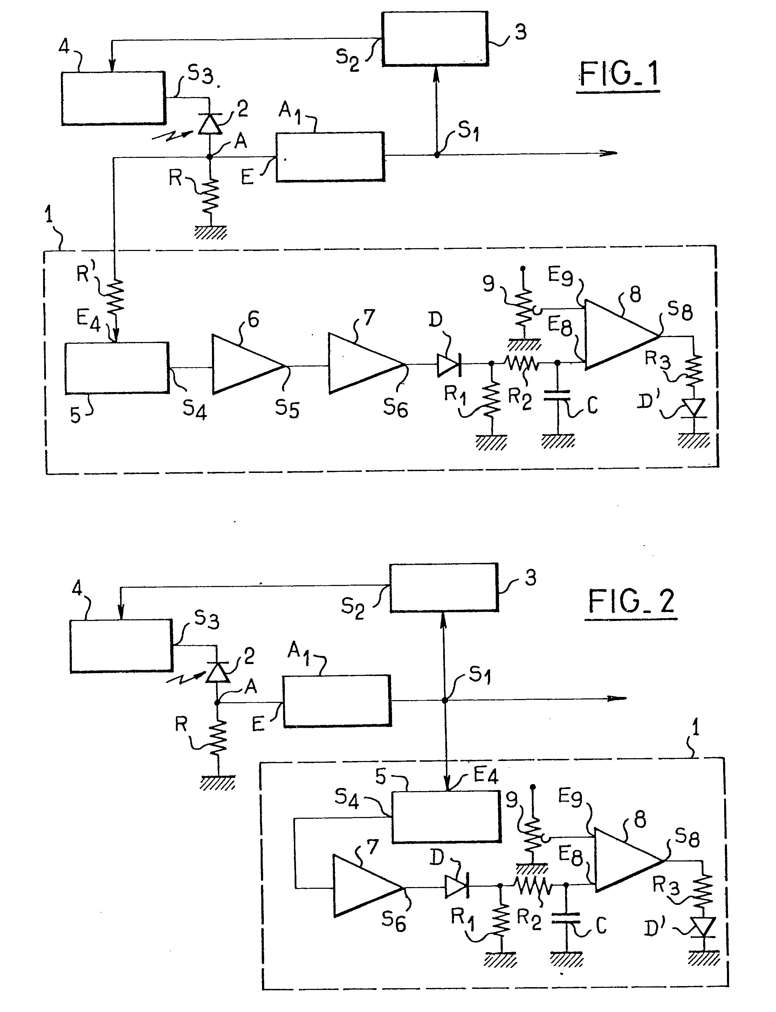

Selon une première variante de l'invention représentée à la figure 1, le dispositif de déclenchement d'alarme 1 conforme à l'invention est connecté en A à un photodétecteur, tel que par exemple une photodiode à avalanche 2, prévu dans le module récepteur d'un système de transmission utilisant une seule fibre optique. L'entrée E d'un amplificateur $A_1$ est connectée en A à la photodiode à avalanche 2, et ledit amplificateur $A_1$ délivre en sortie $S_1$ des impulsions ayant une amplitude, par exemple, d'1 volt crête à crête. Sur la sortie $S_1$ de l'amplificateur $A_1$ est connecté un détecteur crête à crête 3 assurant la régulation automatique de gain de la photodiode à avalanche 2, et dont la sortie $S_2$ est reliée à un circuit de polarisation 4 de la photodiode à avalanche 2, la sortie $S_3$ de ce circuit de polarisation étant connectée à ladite photodiode à avalanche. La photodiode à avalanche 2 est reliée en A à la terre par l'intermédiaire d'une résistance R.

On décrira maintenant la structure du dispositif de déclenchement d'alarme 1 selon cette première variante de la figure 1.

Ce dispositif de déclenchement d'alarme 1 comprend un filtre 5 dont l'entrée $E_4$ est connectée à la photodiode à avalanche 2 par l'intermédiaire d'une résistance R' dont la valeur est nettement plus grande que celle de la résistance R. On notera ici que le filtre 5 a une bande passante extérieure à la bande de fréquences utilisée à la transmission par le code des impulsions. Plus précisément, la frequence moyenne du filtre 5 peut être soit inférieure (dans ce cas, le filtre 5 est un filtre passe-bas), soit supérieure (dans ce cas, le filtre 5 est un filtre passe-haut) aux bornes inférieure ou supérieure de ladite bande de fréquences utilisée à la transmission par le code des impulsions, respectivement. Avantageusement, le code utilisé est par exemple le code 3B-4B/4E 6S6 OM qui est décrit dans la demande de brevet français déposée le 18 décembre 1979 au nom de la Demanderesse et publiée le n° 2 472 310, concernant: «Procédé de transcodage d'informations binaires pour transmission sur ligne et système de transmission l'utilisant».

La sortie $S_4$ du filtre 5 est connectée à très faible bruit 6 dont la sortie $S_5$ est connectée à un amplificateur 7. A la sortie $S_6$ de l'amplificateur 7 est relié un circuit de redressement comportant une diode D et une résistance $R_1$, et en série un cicuit intégrateur comportant une résistance $R_2$ et un condensateur C. La sortie de ce circuit intégrateur est connectée à l'une des bornes d'entrée $E_8$ d'un amplificateur comparateur à seuil 8, tandis que l'autre borne d'entrée $E_9$ dudit amplificateur 8 est reliée à une source de tension réglable de référence élaborée en 9. A la sortie $S_8$ de l'amplificateur comparateur 8 sont connectées en série une résistance $R_3$ et une diode électroluminescente D' commandant une alarme. Bien entendu, on peut remplacer la diode D' par tout autre moyen approprié sans sortir du cadre de l'invention.

Selon une seconde variante de l'invention représentée à la figure 2, et dans laquelle les éléments identiques à ceux de la figure 1 sont désignés par le même repère, le dispositif de déclenchement d'alarme 1 est connecté à la sortie $S_1$ de l'amplificateur $A_1$. Plus précisément, l'entrée $E_4$ du filtre 5 est connectée à la sortie $S_1$ de l'amplificateur $A_1$, et la sortie $S_4$ dudit filtre 5 est directement connectée à l'entrée de l'amplificateur 7.

Le fonctionnement et la manière d'utiliser le dispositif de déclenchement d'alarme selon l'invention se déduisent de la description qui précède et seront expliqués dans ce qui suit.

Tour d'abord, en fonctionnement normal, cest-à-dire en présence d'une puissance optique incidente normalisée, les impulsions électriques codées produites par la photodiode à avalanche 2 sont amplifiées par l'amplificateur $A_1$ et elles ont une amplitude constante à la sortie grâce à une boucle d'asservissement. En effet, l'amplitude crête à crête des impulsions est mesurée par le détecteur crête à crête 3 qui en délivre donc une tension continue proportionnelle. Cette tension est appliquée au circuit de polarisation 4 de la photodiode à avalanche 2 et en commande donc le gain, ladite photodiode possédant en outre une dérive en température. Ainsi, cet asservissement permet le maintien de l'amplitude constante normalisée (par exemple 1 volt crête à crête) des signaux de sortie malgré les variations éventuelles de la température ambiante et les variations de la puissance optique incidente.

En supposant maintenant qu'il existe une insuffisance du niveau de transmission en ligne, c'est-à-dire une insuffisance de la puissance optique incidente, étant donné que l'amplitude des signaux de sortie reste constante, le système d'asservissement décrit ci-dessus provoque une surpolarisation (par rapport à la polarisation normale) de la photodiode à avalanche 2 qui délivre donc en sortie du bruit, de l'ordre par exemple d'1 volt.

Le principe du déclenchement d'alarme réside dans le fait qu'on utilise l'énergie dans une bande de fréquences non utilisée à la transmission du code des impulsions; ceci est obtenu par le filtre 5 dont la bande passante est extérieure à la bande de fréquences utilisée par le code des impulsions.

Ainsi, selon la variante de la figure 1, le bruit est amplifié par le premier amplificateur à faible bruit 6 et par le second amplificateur 7, puis redressé par le circuit de redressement (D et $R_1$), et intégré par le circuit intégrateur ($R_2$ et C), de façon à produire une tension continue proportionnelle à la valeur efficace du bruit. Cette tension est ensuite comparée à une tension de référence élaborée en 9, par l'amplificateur 8. Si cette tension de seuil est atteinte, l'amplificateur comparateur 8 fournit un signal de commande à la diode électroluminescente D' déclenchant une alarme de nature quelconque.

On notera que le réglage de ladite tension de référence permet de déterminer la puissance optique minimum d'alarme; par exemple, la puissance normalisée étant de $-53$ dBm, la puissance d'alarme est de $-60$ dBm.

Ce qui vient d'être décrit précédemment reste valable pour la variante représentée à la figure 2. On ajoutera qu'en ce qui concerne cette variante, le bruit est uniquement amplifié par l'amplificateur 7 compte tenu du niveau suffisant en sortie de l'amplificateur $A_1$.

**Revendications**

1. Dispositif de déclenchement d'alarme pour une insuffisance du niveau de transmission, pour récepteur d'un système de transmission utilisant une fibre optique, comprenant un photodétecteur (2) avec un circuit de régulation automatique de gain, un circuit comparateur de tension (8) et des moyens de déclenchement d'alarme (D') connectés à la sortie du circuit comparateur de tension, caractérisé en ce que le dispositif comporte:
   un filtre (5) de bande passante extérieure à la bande de fréquences utilisée à la transmission sur fibre optique dont l'entrée est connectée au photodétecteur;
   des moyens d'amplification (6, 7) connectés à la sortie du filtre; et
   des moyens de redressement D, $R_1$) connectés à la sortie des moyens d'amplification, le circuit comparateur de tension (8) étant connecté à la sortie des moyens de redressement.

2. Dispositif selon la revendication 1, caractérisé en ce que l'entrée du filtre (5) est connectée au photodétecteur (2) par l'intermédiaire d'un amplificateur ($A_1$) appartenant également au circuit de régulation automatique de gain.

3. Dispositif selon l'une des revendications 1 ou 2, caractérisé en ce que la fréquence moyenne du filtre (5) est inférieure à la borne inférieure de la bande de fréquences utilisée à la transmission sur fibre optique.

4. Dispositif selon l'une des revendications 1 ou 2, caractérisé en ce que la fréquence moyenne du filtre (5) est supérieure à la borne supérieure de la bande de fréquences utilisée à la transmission sur fibre optique.

5. Dispositif selon l'une des revendications précédentes, caractérisé en ce que les moyens d'amplification (6, 7) sont constitués par un premier amplificateur à faible bruit (6) et un second amplificateur (7) connecté en série.

6. Dispositif selon l'une des revendications précédentes, caractérisé en ce que le photodétecteur (2) est une photodiode à avalanche.


## Patentansprüche

1. Schaltungsanordnung zur Auslösung eines Alarms aufgrund eines unzureichenden Übertragungspegels für einen Empfänger eines Übertragungssystems, das Lichtleitfasern verwendet, mit einem Lichtdetektor (2), der einen automatischen Verstärkungs-Regelkreis enthält, mit einem Spannungskomparatorkreis (8) und mit Mitteln zur Auslösung eines Alarms (D'), die an den Ausgang des Spannungskomparatorkreises angeschlossen sind, dadurch gekennzeichnet, dass die Anordnung

ein Filter (5), dessen Eingang an den Lichtdetektor angeschlossen ist und dessen Durchlassfrequenzband ausserhalb des Frequenzbandes liegt, das zur Übertragung auf der Lichtleitfaser verwendet wird;

Verstärkungsmittel (6, 7), die an den Ausgang des Filters angeschlossen sind,

und Mittel zur Gleichrichtung (D, $R_1$) enthält, die mit dem Ausgang des Verstärkungsmittels verbunden sind, wobei der Spannungskomparatorkreis (8) an den Ausgang der Mittel zur Gleichrichtung angeschlossen ist.

2. Schaltungsanordnung nach Anspruch 1, dadurch gekennzeichnet, dass der Eingang des Filters (5) mit dem Lichtdetektor (2) über einen Verstärker ($A_1$) verbunden ist, der ebenfalls zum automatischen Verstärkungsregelkreis gehört.

3. Schaltungsanordnung nach einem der Ansprüche 1 oder 2, dadurch gekennzeichnet, dass die Mittelfrequenz des Filters (5) unterhalb der unteren Bandgrenze des für die Übertragung über die Lichtleitfaser verwendeten Frequenzbands liegt.

4. Schaltungsanordnung nach einem der Ansprüche 1 oder 2, dadurch gekennzeichnet, dass die Mittelfrequenz des Filters (5) oberhalb der oberen Bandgrenze des für die Übertragung über die Lichtleitfaser verwendeten Frequenzbands liegt.

5. Schaltungsanordnung nach einem der vorhergehenden Ansprüche, dadurch gekennzeichnet, dass die Verstärkungsmittel (6, 7) aus einem ersten rauscharmen Verstärker (6) in Reihe mit einem zweiten Verstärker (7) bestehen.

6. Schaltungsanordnung nach einem der vorhergehenden Ansprüche, dadurch gekennzeichnet, dass der Lichtdetektor eine Avalanche-Effekt-Photodiode ist.


## Claims

1. A device for triggering an alarm when the transmission level in a receiver of a transmission system using an optical fibre is insufficient, comprising a photodetector (2) having an automatic gain control circuit, a voltage comparator circuit (8) and means for triggering the alarm (D') connected to the output of the voltage comparator circuit, characterized in that the device comprises

A band pass filter (5), the band of which is outside the frequency band used for the transmission on the optical fibre and the input of which is connected to the photodetector;

amplification means (6, 7) connected to the output of the filter and

rectifying means (D, $R_1$) connected to the output of the amplification means, the voltage comparator circuit (8) being connected to the output of the rectifying means.

2. A device according to claim 1, characterized in that the input of the filter (5) is connected to the photodetector (2) via an amplifier ($A_1$) which also belongs to the automatic gain control circuit.

3. A device according to any one of claims 1 or 2, characterized in that the central frequency of the filter (5) is lower than the lower border of the frequency band used for transmission on the optical fibre.

4. A device according to any one of claims 1 or 2, characterized in that the central frequency of the filter (5) is higher than the higher border of the frequency band used for transmission on the optical fibre.

5. A device according to any one of the preceding claims, characterized in that the amplification means (6, 7) are constituted by a first low noise amplifier (6) connected in series to a second amplifier (7).

6. A device according to any one of the preceding claims, characterized in that the photodetector (2) is an avalanche type photodiode.

FIG_1

FIG_2